# EUROPEAN PATENT SPECIFICATION

(11) **EP 2 712 162 B1**
(45) Date of publication and mention of the grant of the patent: **04.07.2018**
(21) Application number: 12789137.2
(22) Date of filing: 11.05.2012
(51) Int. Cl.: H04M 3/493

(54) **METHOD AND SYSTEM FOR INPUTTING INFORMATION TO MOBILE TERMINAL AS WELL AS MOBILE TERMINAL**
VERFAHREN UND SYSTEM ZUR EINGABE VON INFORMATIONEN AN EIN MOBILES ENDGERÄT SOWIE MOBILES ENDGERÄT
PROCÉDÉ ET SYSTÈME POUR ENTRER DES INFORMATIONS DANS UN TERMINAL MOBILE ET TERMINAL MOBILE

(30) Priority: 20.05.2011 CN 201110131797
(43) Date of publication of application: 26.03.2014
(73) Proprietor: Tencent Technology (Shenzhen) Company Limited, Shenzhen, Guangdong 518044 (CN)
(72) Inventor: PENG, Chuan, Shenzhen Guangdong 518044 (CN); ZHANG, Jun, Shenzhen Guangdong 518044 (CN); CHEN, Difei, Shenzhen Guangdong 518044 (CN); ZHAO, Junfeng, Shenzhen Guangdong 518044 (CN); YU, Yaohui, Shenzhen Guangdong 518044 (CN); ZHANG, Xu, Shenzhen Guangdong 518044 (CN); DU, Lei, Shenzhen Guangdong 518044 (CN)
(74) Representative: Gunzelmann, Rainer
(86) International application number: PCT/CN2012/075346
(87) International publication number: WO 2012/159531

(56) References cited:
- EP-A1- 2 112 813
- CN-A- 1 564 574
- CN-A- 1 564 574
- CN-A- 101 216 829
- CN-A- 101 840 272
- CN-A- 101 840 272
- US-A1- 2009 181 659
- US-A1- 2010 004 032
- US-A1- 2010 203 874
- US-A1- 2010 332 531

## Description

### Field of the invention

The present disclosure relates to mobile communication technology, and more particularly to a method and system for inputting information in mobile terminal as well as mobile terminal.

### Background art

Microblog, which is the abbreviation of the miniature blog, is based on the traditional internet or wireless internet, to provide users with blog service including publishing short text and allowing others to read.

US 2010/203874 A1 discloses that a mobile device with enhanced telephone call information and a method of using same are provided. There is provided a method of providing enhanced phone call information on a mobile communication device, comprising: receiving an incoming call on the device; identifying a contact name in an address book stored in a memory of the device in accordance with a phone number associated with the incoming call when the contact name is not provided with the incoming call; identifying a contact name in a remote contact source in accordance with a phone number associated with the incoming call when the contact name is not provided with the incoming call and not found in the address book stored in a memory of the device; and displaying the identified contact name in a user interface screen on a display screen of the device.

CN 101840272 A discloses a friend input prompt device, which comprises the Internet, a server, a browser, and an input device (3), and also comprising an input inlet module (4), a prompt module (5), an asynchronous request module (7), a result selection module (9) and a confirming selection module (10) which are arranged on the browser and connected with the server through the internet, and a matching analysis module (8) arranged on the server. In the invention, individual characters in a friend name, pinyin of the name or the initial letter of pinyin can be input by a user so as to immediately obtain a friend list without any switching operation, so that the user can quickly select a prompt entry in the list so as to meet the input requirements, and the widespread phenomenon of the same name in the field of Chinese users in the same prompt can be processed.

In microblog service, each microblog user has a microblog user name which is a universally unique identifier of the user in the microblog service and is used to mark an independent address of each microblog user's microblog homepage. Different users have different microblog user names. The microblog user name usually only allows English characters and Arabic numerals.

In addition to the microblog user name, each microblog user further has a microblog user nickname which is a name of the microblog user used in the microblog service. Different microblog users can have the same nickname. The microblog user nickname allows both of English characters and Chinese characters.

Broadcasting is an information transmission method widely used in the microblog services. Each piece of information in the microblog can be called as a broadcast message. Relative to the sender of each broadcast message, the receiver can be called as an audience of the sender, and the sender is equivalent to a person to whom the receiver listens. The server side stores "my audience list" and "my listening list" for each user. The server broadcasts a message sent from a user to each user in the user's "my audience list", and broadcasts a message sent from each user in the user's "my listening list" to the user.

Broadcasting can be divided into dialogue, broadcast, and other forms. "Mention me" is also a form of broadcasting, and is configured to highlight display corresponding broadcast message. Specifically, for any user A, when other user sends a broadcast message mentioned the user A or other user sends a broadcast message to the user A, the broadcast message will appear in an information category "mention me" of the user A.

At present, if one microblog user wants to send a broadcast message to other user, the following form is generally used to input information in terminal: message content@ user name of other user. For example, if the user A wants to send message content 1 to the user B, then information that the user A needs to input in a terminal is: message content 1@ user B. When the microblog user wants to send a broadcast message to several other users, the microblog user needs to successively input names of the other users after the character @.

Since user names of microblog users adopt the form of English characters and Arabic numerals and different microblog users have different user names, thus, when one microblog user wants to send a broadcast message to other user, broadcast message transmission failure or error due to wrong user name input by the user is likely to occur. Particularly when the microblog user wants to send a broadcast message to several other users, since the user needs to input user names of several microblog users, thus, the probability that the user inputs wrong user names is also increased.

In order to avoid broadcast message transmission failure or error due to wrong user name input by the user in the microblog terminal, in a microblog system based on traditional internet, the following method can be adopted to input information in the microblog terminal.

Step 1: after a personal computer (PC) as a microblog terminal receives a character @ input by a user, sending in real time a character input by the user after the character @ to a server side.

Step 2: the server searching in the user's "my audience list", and sending user names and/or nicknames in the list which match the character to the PC.

Step 3: the PC displaying the user names and/or nicknames sent from the server for the user to select, and determining user names and/or nicknames selected by the user as input information.

In a microblog system based on wireless internet, a microblog terminal is a mobile terminal such as a phone, etc. If the mobile terminal uses the same information input method as the PC when determining input microblog information, it is needed to perform frequent information interaction between the mobile terminal and the server. The frequent information interaction occupies a lot of traffic of mobile communication, resulting in that mobile communication resources become more strained.

Further, due to instability of network environment in wireless internet, frequent information interaction between the mobile terminal and the server can also reduce information transmission performance, for example, easily resulting in loss of information and large input delay, and the success rate of information transmission is low.

### Summary

In view of this, one example of the present disclosure provides a method and system for inputting information in mobile terminal as well as a mobile terminal, so as to save traffic of mobile communication.

In order to achieve the above object, the technical solution of the present disclosure is specifically implemented as follows:
A method for inputting information in mobile terminal includes:
a mobile terminal sending a request for acquiring a listening list to a server, wherein a message sent from each user in the listening list is broadcast to the mobile terminal;
the mobile terminal receiving user information in the listening list returned by the server, wherein the user information is selected from the listening list by the server, according to a descending order of frequencies of the user information used by the mobile terminal;
the mobile terminal receiving and storing the user information, matching a character input by a user with the user information, displaying a matching result, and determining input information according to selection of the user of the mobile terminal.

A mobile terminal, including a communication module, a storage module and a query module; wherein
the communication module is configured to send a request for acquiring a listening list to a server, and receive user information of the listening list returned by the server, wherein a message sent from each user in the listening list is broadcast to the mobile terminal, and the user information is selected from the listening list by the server, according to a descending order of frequencies of the user information used by the mobile terminal;
the storage module is configured to store the user information;
the query module is configured to match a character input by a user of the mobile terminal with the user information stored in the storage module, display a matching result and determine input information according to selection of the user of the mobile terminal.

A system for inputting information, including a mobile terminal and a server; wherein
the mobile terminal sends a request for acquiring a listening list to the server;
after the server receives the request, the server sends user information of a corresponding listening list to the mobile terminal, wherein a message sent from each user in the listening list is broadcast to the mobile terminal, and the user information is selected from the listening list by the server, according to a descending order of frequencies of the user information used by the mobile terminal;
the mobile terminal receives and stores the user information, matches a character input by a user of the mobile terminal with the user information, displays a matching result, and determines input information according to selection of the user of the mobile terminal.

It can be seen from the above technical solution, in the present disclosure, a mobile terminal sends a request for acquiring listening list to a server; the server sends user information in a corresponding listening list to the mobile terminal; the mobile terminal stores the user information in the local, matches a character input by a user with the user information and determines input information according to the user's selection of the matching result. In the present disclosure, after the server sends user information in a listening list to the mobile terminal, since the mobile terminal stores the user information in the local, thus it is not needed to perform frequent information interaction between the mobile terminal and the server; compared with performing frequent information interaction, the traffic of mobile communication can be saved. In other words, in the whole user's inputting process, the mobile terminal only needs to match information input by the user with the user information data stored in the mobile terminal, and does not involve any interaction operation with the server and the network layer, thereby avoiding overloading the performance of the mobile terminal caused by continuously connecting to the network and querying user information as well as potential risks of mobile data traffic overrun.

### Brief description of the drawings

Fig. 1 is a flowchart of a method for inputting information in mobile terminal according to the present disclosure;
Fig. 2 is a diagram of a system for inputting information in mobile terminal according to the present disclosure; and
Fig. 3 is a diagram of a mobile terminal according to the present disclosure.

### Detailed description

To make the technical solution and advantages of the present disclosure more clear, the present disclosure is hereinafter described in detail with reference to examples and the accompanying drawings.

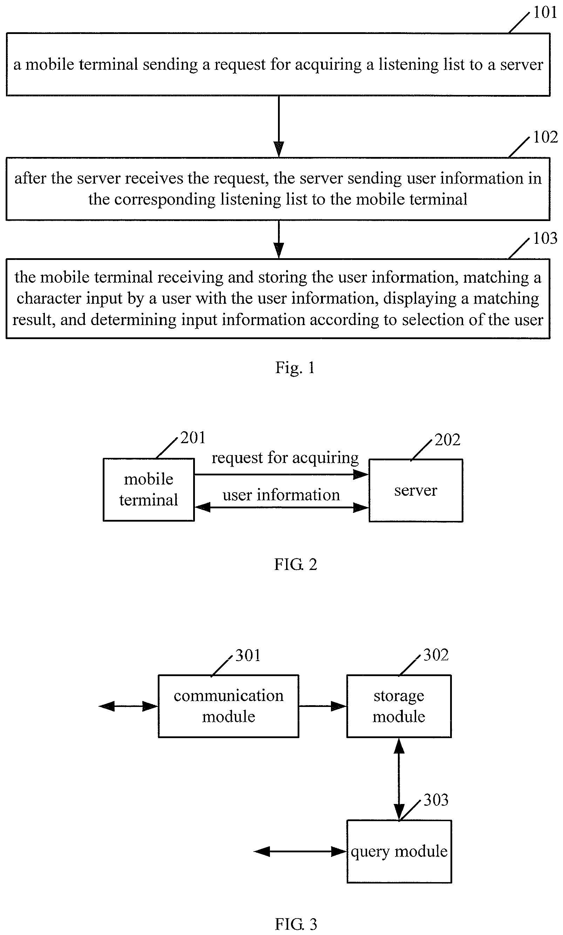

Fig. 1 is a flowchart of a method for inputting information in mobile terminal according to the present disclosure.

As shown in Fig. 1, the method includes:
Step 101: a mobile terminal sending a request for acquiring listening list to a server.
Step 102: after the server receives the request, the server sending user information in a corresponding listening list to the mobile terminal.

As an implementation way, in this step, amount of user information returned each time by the server to the mobile terminal, is not greater than a predetermined number, thereby avoiding information transmission failure caused by large amount of data, so as to further improve success rate of information transmission.

In this step, if the amount of the user information in the listening list is greater than the predetermined number, the server sends in two or more batches the user information in the listening list to the mobile terminal, thus, the large amount of data can be sent in batches so as to reduce amount of date sent in each time, so that the success rate of data transmission can be improved by reducing amount of date sent each time in a mobile communication network environment of poor stability.

The predetermined number can be determined based on experience or statistical results. For example, if a number of frequent contacted users in a listening list of most microblog users is not greater than 100, the predetermined number can be set to be 100. Details about how to set the predetermined number and specific value of the predetermined number are not limited here.

Step 103: the mobile terminal receiving and storing the user information, matching a character input by a user with the user information, displaying a matching result, and determining input information according to selection of the user.

In the method shown in Fig. 1, the server can return user information to the mobile terminal according to frequencies of user information used by the mobile terminal. For example, according to a descending order of the frequencies of user information used by the mobile terminal, corresponding user information can be selected from the listening list and sent to the mobile terminal. The mobile terminal can also display in sequence user information which matches with the character input by the user, according to the descending order of the frequencies of user information used by the mobile terminal.

In the method shown in Fig. 1, the mobile terminal can send the request for acquiring listening list to the server after the mobile terminal receives a microblog service logon request for the first time, and sends only once the request for acquiring listening list before this logon exits. After the server receives the request for acquiring listening list, the server sends in one batch or more batches the user information in the corresponding listening list to the mobile terminal. Since the mobile terminal sends only once the request for acquiring listening list before this logon exits, thus, compared with frequently interacting with the server in the related art, the traffic of mobile communication can be saved.

In order to be able to ensure real-time performance of the user information in the listening list stored in the mobile terminal side while saving the traffic of mobile communication, according to the present disclosure, the mobile terminal can send the request for acquiring listening list to the server after the mobile terminal receives a microblog service logon request for the first time in each predetermined length of time period, and the mobile terminal sends only once the request for acquiring listening list before this first logon exits. The mobile terminal updates user information in the listening list stored locally in the mobile terminal according to user information in the listening list returned by the server.

In the server side, user name information and user nickname information of each microblog user are separately stored, respectively. For example, the user name information is stored in a user name list, and the user nickname information is stored in a user nickname list. In order to improve the speed at which the mobile terminal determines input information, the present disclosure provides: the server puts user name information and user nickname information of each user in the listening list into a character string, takes the character string as user information of each user and sends the character string to the mobile terminal. The mobile terminal stores the character string. After one user input the character @, the mobile terminal matches a character continued to be input by the user with the character string. Since the character string includes both of the user name information and the user nickname information of the microblog user, thus, the mobile terminal can match the character input by the user with the user name information of the microblog user and match the character input by the user with the user nickname of the microblog user through one matching operation on the character string. This can improve matching speed, thereby improving the speed at which the mobile terminal determines input information.

Further, since the character string includes both of the user name information and the user nickname information of the microblog user, thus, it is not needed to set separate storage entries for the user name information and the user nickname information, respectively, this can also save storage space.

The matching of the present disclosure can be English character match, number match and/or Chinese character match.

According to the above method, the present disclosure also provides a corresponding inputting system, details of which refer to Fig. 2.

Fig. 2 is a diagram of a system for inputting information in mobile terminal according to the present disclosure.

As shown in Fig. 2, the system includes a mobile terminal 201 and a server 202.

The mobile terminal 201 sends a request for acquiring listening list to the server 202.

After the server 202 receives the request, the server 202 sends user information of the corresponding listening list to the mobile terminal 201.

The mobile terminal 201 receives and stores the user information, matches a character input by a user with the user information, displays a matching result, and determines input information according to selection of the user.

As an implementation way, amount of user information returned each time by the server 202 to the mobile terminal 201, is not greater than a predetermined number.

If the amount of the user information in the listening list is greater than the predetermined number, the server 202 sends in two or more batches the user information in the listening list to the mobile terminal 201.

After the mobile terminal 201 receives a microblog service logon request for the first time, the mobile terminal 201 can send the request for acquiring listening list to the server 202, and sends only once the request for acquiring listening list before this logon exits.

The mobile terminal 201 can send the request for acquiring listening list to the server 202 after the mobile terminal 201 receives a microblog service logon request for the first time in each predetermined length of time period, and the mobile terminal 201 sends only once the request for acquiring listening list before this first logon exits. The mobile terminal 201 updates user information in the listening list stored locally in the mobile terminal 201 according to user information in the listening list returned by the server 202.

Fig. 3 is a diagram of a mobile terminal according to the present disclosure.

As shown in Fig. 3, the mobile terminal includes a communication module 301, a storage module 302 and a query module 303.

The communication module 301 is configured to send a request for acquiring listening list to a server, and receive user information of a listening list returned by the server.

The storage module 302 is configured to store the user information.

The query module 303 is configured to match a character input by the user with the user information stored in the storage module 302, display a matching result and determine input information according to selection of the user.

The communication module 301 is configured to, after receiving a microblog service logon request for the first time, send the request for acquiring listening list to the server, receive user information returned by the server and store the user information in the storage module 302.

The storage module 302 is configured to store the user information returned by the server.

The query module 303 is configured to receive an instruction for finding user information, match a character input by the user with the user information stored in the storage module 302, display a matching result and determine input information according to selection of the user.

The communication module 301 is configured to, after receiving a microblog service logon request for the first time in each predetermined length of time period, send the request for acquiring listening list to the server and send only once the request for acquiring listening list before this first logon exits.

The storage module 302 is configured to update user information in the locally stored listening list according to user information in the listening list returned by the server.

As an implementation way, amount of user information returned each time by the server is not greater than a predetermined number.

At present, in microblog service, the instruction for finding user information usually is the character @ input by the user.

The storage module 302 can store a character string composed of user name information and user nickname information of each microblog user. The query module 303 can match the character input by the user with the character string in the storage module 302 and determines input information according to the user's selection of the matching result.

Through storing the character string composed of user name information and user nickname information of each microblog user, using the query module 303 to perform matching search for the character input by the user, compared with separately storing user name information and user nickname information, respectively, this can reduce the complexity of the mobile matching search performed by the mobile terminal and can also improve search speed.

The above method, system and apparatus can be applied to all scenes of inputting "@ user name" in microblog client, for example, microblog client sending a broadcast message, making a dialogue with other microblog client, sending private message, and so on.

In short, the present disclosure fully considers two factors including mobile communication network data traffic restrictions and performance restrictions of the mobile terminal itself, achieves inputting information in the mobile terminal and improves success rate of information input.

## Claims

1. A method for inputting information in a mobile terminal, the method comprising:
a mobile terminal sending (101) a request for acquiring a listening list to a server, wherein a message sent from each user in the listening list is broadcast to the mobile terminal;
the mobile terminal receiving (102) user information in the listening list returned by the server,
**characterized in that**
the user information is selected from the listening list by the server, according to a descending order of frequencies of the user information used by the mobile terminal; and
the mobile terminal receiving (103) and storing (103) the user information, matching a character input by a user of the mobile terminal with the user information, displaying a matching result, and determining (103) input information according to selection of the user of the mobile terminal.

2. The method of claim 1, wherein
amount of the user information returned each time by the server is not greater than a predetermined number.

3. The method of claim 1, wherein the mobile terminal receiving user information in the listening list returned by the server comprises:
the mobile terminal receiving the user information in the listening list which is returned by the server in two or more batches, if the amount of the user information in the listening list is greater than the predetermined number.

4. The method of claim 1, 2, or 3, wherein the mobile terminal receiving user information in a listening list returned by the server comprises:
the mobile terminal receiving a character string which is returned by the server and is taken as user information of users; wherein the character string is composed of user name information and user nickname information of each user in the listening list returned by the server.

5. A mobile terminal, comprising a communication module (301), a storage module (302) and a query module (303); wherein
the communication module is configured to send a request for acquiring a listening list to a server, and receive user information of the listening list returned by the server, wherein a message sent from each user in the listening list is broadcast to the mobile terminal,
**characterized in that**
the user information is selected from the listening list by the server, according to a descending order of frequencies of the user information used by the mobile terminal;
the storage module is configured to store the user information; and
the query module is configured to match a character input by a user of the mobile terminal with the user information stored in the storage module, display a matching result and determine input information according to selection of the user of the mobile terminal.

6. The mobile terminal of claim 5, wherein
the storage module is configured to store a character string composed of user name information and user nickname information of each user;
the query module is configured to match the character input by the user with the character string stored in the storage module, and determine input information according to the user's selection of the matching result.

7. A system for inputting information, comprising a mobile terminal (201) and a server (202); wherein
the mobile terminal sends a request for acquiring a listening list to the server;
after the server receives the request, the server sends user information of a corresponding listening list to the mobile terminal, wherein a message sent from each user in the listening list is broadcast to the mobile terminal,
**characterized in that**
the user information is selected from the listening list by the server, according to a descending order of frequencies of the user information used by the mobile terminal; and
the mobile terminal receives and stores the user information, matches a character input by a user of the mobile terminal with the user information, displays a matching result, and determines input information according to selection of the user of the mobile terminal.

8. The system of claim 7, wherein
amount of the user information returned each time by the server to the mobile terminal is not greater than a predetermined number.

9. The system of claim 8, wherein
the server sends in two or more batches the user information in the listening list to the mobile terminal, if the amount of the user information in the listening list is greater than the predetermined number.

## Patentansprüche

1. Verfahren zur Eingabe von Information in ein mobiles Endgerät, wobei das Verfahren umfasst:
Senden (101) einer Anforderung zum Beziehen einer Anhörliste an einen Server durch ein mobiles Endgerät, wobei eine Nachricht, die von jedem Benutzer in der Anhörliste gesendet wird, an das mobile Endgerät rundgesendet wird;
Empfangen (102) einer Benutzerinformation in der Anhörliste, die von dem Server zurückgesendet wird, durch das mobile Endgerät,
**dadurch gekennzeichnet, dass**
die Benutzerinformation aus der Anhörliste von dem Server gemäß einer absteigenden Reihenfolge von Frequenzen der Benutzerinformation, die von dem mobilen Endgerät verwendet wird, ausgewählt wird; und
Empfangen (103) und Speichern (103) der Benutzerinformation, wobei eine Zeicheneingabe durch einen Benutzer des mobilen Endgeräts mit der Benutzerinformation abgeglichen wird, Anzeigen eines abgeglichenen Ergebnisses und Bestimmen (103) von Eingabeinformation gemäß einer Auswahl des Benutzers des mobilen Endgeräts durch das mobile Endgerät.

2. Verfahren nach Anspruch 1, wobei
ein Umfang der Benutzerinformation, die jedes Mal von dem Server zurückgesendet wird, nicht größer als eine vorherbestimmte Zahl ist.

3. Verfahren nach Anspruch 1, wobei das Empfangen von Benutzerinformation in der Anhörliste, die von dem Server zurückgesendet wird, durch das mobile Endgerät umfasst:
Empfangen der Benutzerinformation in der Anhörliste, die von dem Server zurückgesendet wird, durch das mobile Endgerät in zwei oder mehr Batches, wenn der Umfang der Benutzerinformation in der Anhörliste größer als die vorherbestimmte Zahl ist.

4. Verfahren nach Anspruch 1, 2 oder 3, wobei das Empfangen von Benutzerinformation in einer Anhörliste, die von dem Server zurückgesendet wird, durch das mobile Endgerät umfasst:
Empfangen einer Zeichenkette, die von dem Server zurückgesendet wird und als Benutzerinformation von Benutzern genommen wird, durch das mobile Endgerät;
wobei die Zeichenkette sich aus Benutzernameninformation und Benutzerspitznameninformation jedes Benutzers in der Anhörliste, die von dem Server zurückgesendet wird, zusammensetzt.

5. Mobiles Endgerät, umfassend ein Kommunikationsmodul (301), ein Speichermodul (302) und ein Abfragemodul (303); wobei
das Kommunikationsmodul dazu konfiguriert ist, eine Anforderung zum Beziehen einer Anhörliste an einen Server zu senden und Benutzerinformation der Anhörliste, die von dem Server zurückgesendet wird, zu empfangen, wobei eine Nachricht, die von jedem Benutzer in der Anhörliste gesendet wird, an das mobile Endgerät rundgesendet wird,
**dadurch gekennzeichnet, dass**
die Benutzerinformation aus der Anhörliste von dem Server gemäß einer absteigenden Reihenfolge von Frequenzen der Benutzerinformation, die von dem mobilen Endgerät verwendet wird, ausgewählt wird;
das Speichermodul dazu konfiguriert ist, die Benutzerinformation zu speichern; und
das Abfragemodul dazu konfiguriert ist, eine Zeicheneingabe durch einen Benutzer des mobilen Endgeräts mit der Benutzerinformation, die in dem Speichermodul gespeichert ist, abzugleichen, ein abgeglichenes Ergebnis anzuzeigen und Eingabeinformation gemäß einer Auswahl des Benutzers des mobilen Endgeräts zu bestimmen.

6. Mobiles Endgerät nach Anspruch 5, wobei
das Speichermodul dazu konfiguriert ist, eine Zeichenkette zu speichern, die sich aus Benutzernameninformation und Benutzerspitznameninformation jedes Benutzers zusammensetzt;
das Abfragemodul dazu konfiguriert ist, die Zeicheneingabe durch den Benutzer mit der Zeichenkette, die in dem Speichermodul gespeichert ist, abzugleichen und Eingabeinformation gemäß der Auswahl des abgeglichenen Ergebnisses durch den Benutzer zu bestimmen.

7. System zur Eingabe von Information, umfassend ein mobiles Endgerät (201) und einen Server (202), wobei
das mobile Endgerät eine Anforderung zum Beziehen einer Anhörliste an den Server sendet;
nachdem der Server die Anforderung empfangen hat, der Server Benutzerinformation einer entsprechenden Anhörliste an das mobile Endgerät sendet, wobei eine Nachricht, die von jedem Benutzer in der Anhörliste gesendet wird, an das mobile Endgerät rundgesendet wird,
**dadurch gekennzeichnet, dass**
die Benutzerinformation aus der Anhörliste von dem Server gemäß einer absteigenden Reihenfolge von Frequenzen der Benutzerinformation, die von dem mobilen Endgerät verwendet wird, ausgewählt wird; und
das mobile Endgerät die Benutzerinformation empfängt und speichert, eine Zeicheneingabe durch einen Benutzer des mobilen Endgeräts mit der Benutzerinformation abgleicht, ein abgeglichenes Ergebnis anzeigt und Eingabeinformation gemäß einer Auswahl des Benutzers des mobilen Endgeräts bestimmt.

8. System nach Anspruch 7, wobei
ein Umfang der Benutzerinformation, die jedes Mal von dem Server an das mobile Endgerät zurückgesendet wird, nicht größer als eine vorherbestimmte Zahl ist.

9. System nach Anspruch 8, wobei
der Server die Benutzerinformation in der Anhörliste in zwei oder mehr Batches an das mobile Endgerät sendet, wenn der Umfang der Benutzerinformation in der Anhörliste größer als die vorherbestimmte Zahl ist.

## Revendications

1. Procédé pour entrer des informations dans un terminal mobile, le procédé comprenant :
un terminal mobile envoyant (101) une requête pour acquérir une liste d'écoute à un serveur, un message envoyé en provenance de chaque utilisateur dans la liste d'écoute étant diffusé sur le terminal mobile ;
le terminal mobile recevant (102) des informations d'utilisateur dans la liste d'écoute renvoyée par le serveur,
**caractérisé par le fait que**
les informations d'utilisateur sont sélectionnées à partir de la liste d'écoute par le serveur, selon un ordre décroissant de fréquences des informations d'utilisateur utilisées par le terminal mobile ; et
le terminal mobile recevant (103) et stockant (103) les informations d'utilisateur, mettant en correspondance un caractère entré par un utilisateur du terminal mobile avec les informations d'utilisateur, affichant un résultat de mise en correspondance, et déterminant (103) des informations d'entrée selon une sélection de l'utilisateur du terminal mobile.

2. Procédé selon la revendication 1, dans lequel la quantité des informations d'utilisateur renvoyées à chaque fois par le serveur n'est pas supérieure à un nombre prédéterminé.

3. Procédé selon la revendication 1, dans lequel le terminal mobile recevant des informations d'utilisateur dans la liste d'écoute renvoyée par le serveur comprend :
le terminal mobile recevant les informations d'utilisateur dans la liste d'écoute qui est renvoyée par le serveur dans au moins deux lots, si la quantité des informations d'utilisateur dans la liste d'écoute est supérieure au nombre prédétermi né.

4. Procédé selon la revendication 1, 2 ou 3, dans lequel le terminal mobile recevant des informations d'utilisateur dans une liste d'écoute renvoyée par le serveur comprend :
le terminal mobile recevant une chaîne de caractères qui est renvoyée par le serveur et est prise en tant qu'informations d'utilisateur d'utilisateurs ; la chaîne de caractères étant composée d'informations de nom d'utilisateur et d'informations de surnom d'utilisateur de chaque utilisateur dans la liste d'écoute renvoyée par le serveur.

5. Terminal mobile, comprenant un module de communication (301), un module de stockage (302) et un module d'interrogation (303) ; dans lequel
le module de communication est configuré pour envoyer une requête pour acquérir une liste d'écoute à un serveur, et recevoir des informations d'utilisateur dans la liste d'écoute renvoyée par le serveur, un message envoyé en provenance de chaque utilisateur dans la liste d'écoute étant diffusé sur le terminal mobile,
**caractérisé par le fait que**
les informations d'utilisateur sont sélectionnées à partir de la liste d'écoute par le serveur, selon un ordre décroissant de fréquences des informations d'utilisateur utilisées par le terminal mobile ;
le module de stockage est configuré pour stocker les informations d'utilisateur ; et
le module d'interrogation est configuré pour mettre en correspondance un caractère entré par un utilisateur du terminal mobile avec les informations d'utilisateur stockées dans le module de stockage, afficher un résultat de mise en correspondance et déterminer des informations d'entrée selon une sélection de l'utilisateur du terminal mobile.

6. Terminal mobile selon la revendication 5, dans lequel
le module de stockage est configuré pour stocker une chaîne de caractères composée d'informations de nom d'utilisateur et d'informations de surnom d'utilisateur de chaque utilisateur ;
le module d'interrogation est configuré pour mettre en correspondance le caractère entré par l'utilisateur avec la chaîne de caractères stockée dans le module de stockage, et déterminer des informations d'entrée selon la sélection de l'utilisateur du résultat de mise en correspondance.

7. Système pour entrer des informations, comprenant un terminal mobile (201) et un serveur (202) ; dans lequel
le terminal mobile envoie une requête pour acquérir une liste d'écoute au serveur ;
après que le serveur reçoit la requête, le serveur envoie des informations d'utilisateur d'une liste d'écoute correspondante au terminal mobile, un message envoyé en provenance de chaque utilisateur dans la liste d'écoute étant diffusé sur le terminal mobile,
**caractérisé par le fait que**
les informations d'utilisateur sont sélectionnées à partir de la liste d'écoute par le serveur, selon un ordre décroissant de fréquences des informations d'utilisateur utilisées par le terminal mobile ; et
le terminal mobile reçoit et stocke les informations d'utilisateur, met en correspondance un caractère entré par un utilisateur du terminal mobile avec les informations d'utilisateur, affiche un résultat de mise en correspondance, et détermine des informations d'entrée selon une sélection de l'utilisateur du terminal mobile.

8. Système selon la revendication 7, dans lequel la quantité des informations d'utilisateur renvoyées à chaque fois par le serveur au terminal mobile n'est pas supérieure à un nombre prédéterminé.

9. Système selon la revendication 8, dans lequel le serveur envoie dans au moins deux lots les informations d'utilisateur dans la liste d'écoute au terminal mobile, si la quantité des informations d'utilisateur dans la liste d'écoute est supérieure au nombre prédéterminé.
